# EUROPEAN PATENT SPECIFICATION

(11) **EP 1 728 662 B1**
(45) Date of publication and mention of the grant of the patent: **25.07.2007**
(21) Application number: 05253390.8
(22) Date of filing: 02.06.2005
(51) Int. Cl.: B60H 1/32, B60H 1/00

(54) **Refrigeration system for an air conditioner**
Kühlsystem für eine Klimaanlage
Système de refroidissement pour climatisation

(43) Date of publication of application: 06.12.2006
(73) Proprietor: Delphi Technologies, Inc., Troy, MI 48007 (US)
(72) Inventor: Petesch, Jean-Claude, L-8283 Luxembourg (LU)
(74) Representative: Jones, Keith William

(56) References cited:
- EP-A- 1 422 085
- WO-A-03/026103
- DE-A1- 10 140 630

## Description

The present invention relates to a refrigeration system for an air conditioning system and in particular to a refrigeration system operating in transcritical mode.

Carbon dioxide is being considered as a replacement refrigerant for air conditioning systems, particularly for use in the automotive industry as well as in other applications, mainly due to the low toxicity of such refrigerant. However, carbon dioxide based systems have many challenges resulting from the fact that such systems operates in transcritical mode leading to high pressures and high compressor out temperatures. Other challenges are the low critical temperature and the shape of the isotherms around the critical point. The performance of the gas cooler is therefore limited by the ambient air temperature because the refrigerant cannot be cooled to lower than the ambient temperature.

In order to improve the performance of such carbon dioxide systems it is desirable to have additional cooling of the refrigerant downstream of the exit from the gas cooler. This is usually achieved in the prior art through an internal heat exchanger, where cold refrigerant at exit from the evaporator is used to further cool down the refrigerant leaving the gas cooler. This method, although achieving the goal of improving the cooling capacity, has the drawback that it will increase drastically the amount of superheat going into the compressor and therefore results in lower refrigerant density at the compressor suction inlet and higher compressor outlet temperature, which can shorten the life of the compressor and require the gas cooler to be made from special heat resistant materials as well as reducing the COP (coefficient of performance) of the system.

The object of the present invention is to provide further cooling of the refrigerant to below ambient temperature whilst avoiding the need to have high superheat and high compressor outlet temperature, thus improving the efficiency and performance of the system.

Document WO 03/026103, which is considered as the closest prior art, discloses the use of a further heat exchanger downstream of the gas cooler/condenser and upstream of the expansion valve, said further heat exchanger being arranged to receive ambient air. However, the efficiency of this system can further be improved.

According to the present invention there is provided a refrigeration system for an air conditioner comprising a compressor for compressing a refrigerant, a gas cooler or condenser downstream of the compressor utilising ambient air for cooling and/or condensing the refrigerant, an expansion valve downstream of the gas cooler/condenser for reducing the pressure of the refrigerant and a first heat exchanger downstream of the expansion valve for evaporating the refrigerant and for cooling air supplied to a space to be cooled, wherein a further heat exchanger is provided downstream of the gas cooler/condenser and upstream of the expansion valve, characterised in that said further heat exchanger is arranged to receive air from the space to be cooled, such air being discharged from the space to be cooled downstream of the further heat exchanger.

Preferably the refrigerant is carbon dioxide.

An embodiment of the present invention will now be described by way of example only, and with reference to the accompanying drawings in which:
Figure 1 is a schematic diagram of the refrigeration circuit of an air conditioning system according to an embodiment of the present invention for cooling the passenger compartment of a vehicle;
Figure 2 is a schematic diagram of the air conditioning system of Fig 1 wherein the refrigeration circuit adapted to operate in a heat pump mode for heating the passenger compartment of a vehicle.

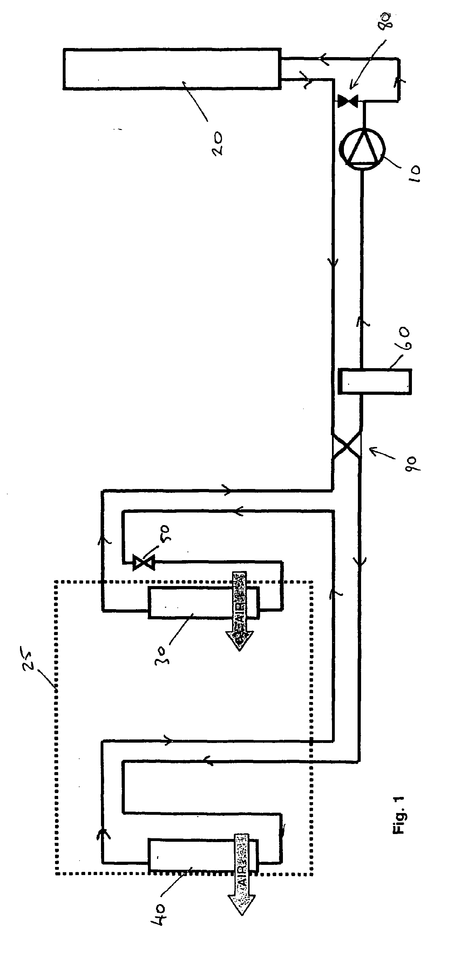

Fig. 1 illustrates an air conditioning system according to the present invention for use with a vehicle to control the air temperature within the passenger compartment of the vehicle. The air conditioning system comprises a compressor 10, a front heat exchanger 20 (condenser/gas cooler), which may be located in a front of the vehicle engine compartment, for utilising ambient air to cool/condense refrigerant, a first heat exchanger 30, preferably provided in the front of the vehicle passenger compartment 25 (e.g. within the vehicle instrument panel or dashboard) capable of receiving ambient air from outside of the vehicle and arranged to discharge the air downstream of the first heat exchanger 30 into the passenger compartment 25 of the vehicle, a further heat exchanger 40, preferably in the rear of the passenger compartment 25, arranged to receive air from the passenger compartment 25 of the vehicle and to discharge air out of the passenger compartment 25 downstream of the further heat exchanger 40, an expansion valve 50 for reducing the pressure of the refrigerant and a refrigerant accumulator/reservoir 60.

As shown in Fig 1, when the air conditioning system is configured to cool the vehicle, the refrigerant circuit passes refrigerant from the compressor 10 into the front heat exchanger 20, wherein the refrigerant is condensed and/or cooled by heat transfer with ambient air passing through the front heat exchanger 20, the refrigerant subsequently being passed into the further heat exchanger 40, wherein the refrigerant is further cooled by heat transfer with air from within the passenger compartment 25 of the vehicle, said air having been cooled to below the temperature of the ambient air outside of the vehicle by virtue of the air conditioning system. The refrigerant is then passed through the expansion valve 50, wherein the pressure of the refrigerant is reduced, before passing through the first heat exchanger 30 wherein the refrigerant is evaporated, thereby cooling air passing into the passenger compartment 25 through the first heat exchanger 30. The refrigerant then exits the first heat exchanger 30 and passes through the accumulator 50 before returning to the compressor 10 to be compressed and passed back into the high pressure side of the refrigerant circuit. The air passing through the first heat exchanger can be selected from ambient air, recirculated passenger compartment air or a mixture of the two, depending upon the setting of the air conditioning control system, as is conventional in the art.

By using air drawn from the passenger compartment of the vehicle at a temperature lower than the ambient air outside of the vehicle to further cool the refrigerant as it passes through the further heat exchanger, the refrigerant can be cooled to a temperature below that achievable using ambient air alone without the detrimental effects of using the low pressure coolant to cool the high pressure coolant in an internal heat exchanger. Thus the present invention provides an increased coefficient of performance (COP) and reduced compressor outlet temperatures.

By controlling the air flow through the further heat exchanged 40, the heat transfer between the air and the refrigerant and thus the amount of subcooling of the refrigerant can be controlled, thus controlling operation of the refrigeration system. This control of the airflow can be achieved by means of a variable speed blower or fan or by means of louvres or shutters over the further heat exchanger.

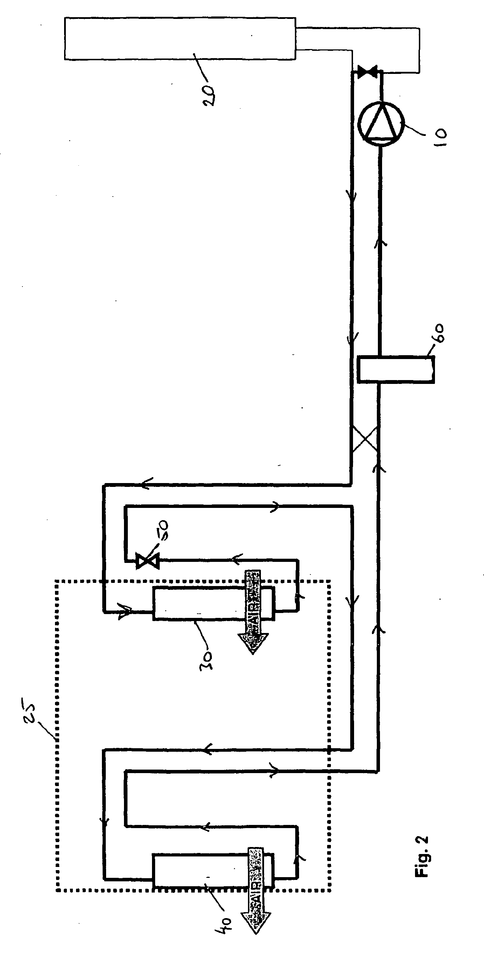

As shown in Fig 2, the further heat exchanger can optionally be utilised in a heat pump refrigerant cycle wherein the further heat exchanger 40 acts as a condenser/gas cooler for the refrigeration cycle in place of the front heat exchanger 20. When used as a heat pump, the air temperature inside the passenger compartment is higher than the ambient temperature. By using the further heat exchanger 40 as a condenser/gas cooler in place of the front heat exchanger to cool the gas, said further heat exchanger 40 receiving air at a higher temperature than that of the ambient air, the problem of ice formation in the condenser/gas cooler is avoided.

Whilst the preferred embodiment of the present invention has been described in relation to an air conditioning system for an automotive vehicle, it is envisaged that the present invention is equally applicable to any circumstances wherein the air temperature within a closed space is to be controlled, such as in a hotel room or other domestic dwelling or in other forms of transport, such as aircraft of boats.

## Claims

1. A refrigeration system for an air conditioner comprising a compressor (10) for compressing a refrigerant, a gas cooler or condenser (20) downstream of the compressor (10) utilising ambient air for cooling and/or condensing the refrigerant, at least one expansion valve (50) downstream of the gas cooler/condenser (20) for reducing the pressure of the refrigerant and a first heat exchanger (30) downstream of the expansion valve (50) for evaporating the refrigerant and for cooling air supplied to a space to be cooled, wherein a further heat exchanger (40) is provided downstream of the gas cooler/condenser (20) and upstream of the expansion valve (50), **characterized in that** said further heat exchanger (40) is arranged to receive air from the space to be cooled, such air being discharged from the space to be cooled downstream of the further heat exchanger (40).

2. A refrigeration system as claimed in claim 1, wherein the refrigerant is carbon dioxide.

3. A refrigeration system as claimed in any preceding claim, wherein the space to be cooled is the passenger compartment of a vehicle.

4. A refrigeration system as claimed in claim 3, wherein the gas cooler/condenser (20) is provided outside of the passenger compartment, preferably in the front of the vehicle.

5. A refrigeration system as claimed in claim 3 or claim 4, wherein the further heat exchanger (40) is provided in or adjacent a rear section of the passenger compartment.

6. A refrigeration system as claimed in any preceding claim, further comprising control means for selectively adapting the system to operate as a heat pump whereby the refrigerant upstream of the compressor (10) bypasses the condenser gas/cooler (20) and passes directly into the first heat exchanger (30) wherein the refrigerant is condensed/cooled, causing ambient air passing into the passenger compartment through the first heat exchanger (30) to be heated, the refrigerant subsequently passing through the at least one expansion valve (50) and then passing into the further heat exchanger (40) wherein the refrigerant is evaporated by heat transfer with air from within the passenger compartment, the refrigerant passing from the further heat exchanger (40) back to the compressor (10).

7. A refrigeration system as claimed in any preceding claim, further comprising means for controlling the flow of air through the further heat exchanger (40).

8. A refrigeration system as claimed in claim 7, wherein the means for controlling the flow of air through the further heat exchanger comprises a variable speed fan or blower.

## Patentansprüche

1. Ein Kühlungssystem für eine Klimaanlage, das einen Kompressor (10) zum Komprimieren eines Kühlmittels, einen Gaskühler oder Kondensator (20) unterhalb des Kompressors (10) unter Benutzung von Umgebungsluft zum Kühlen und/oder Kondensieren des Kühlmittels, mindestens ein Expansionsventil (50) unterhalb des Gaskühlers/Kondensators (20) zum Reduzieren des Drucks des Kühlmittels und einen ersten Wärmeaustauscher (30) unterhalb des Expansionsventils (50) zum Verdampfen des Kühlmittels und zum Kühlen der Luft, die an einen zu kühlenden Raum geliefert wird, beinhaltet, wobei ein weiterer Wärmeaustauscher (40) unterhalb des Gaskühlers/Kondensators (20) und oberhalb des Expansionsventils (50) bereitgestellt wird, **dadurch gekennzeichnet, dass** der weitere Wärmeaustauscher (40) angeordnet ist, um Luft von dem zu kühlenden Raum zu empfangen, wobei die Luft von dem zu kühlenden Raum unterhalb des weiteren Wärmeaustauschers (40) ausgestoßen wird.

2. Kühlungssystem gemäß Anspruch 1, wobei das Kühlmittel Kohlendioxid ist.

3. Kühlungssystem gemäß einem der vorhergehenden Ansprüche, wobei der zu kühlende Raum der Innenraum eines Fahrzeugs ist.

4. Kühlungssystem gemäß Anspruch 3, wobei der Gaskühler/Kondensator (20) außerhalb des Innenraums, vorzugsweise in der Vorderseite des Fahrzeugs, bereitgestellt wird.

5. Kühlungssystem gemäß Anspruch 3 oder Anspruch 4, wobei der weitere Wärmeaustauscher (40) in oder angrenzend an einem hinteren Teilabschnitt des Innenraums bereitgestellt wird.

6. Kühlungssystem gemäß einem der vorhergehenden Ansprüche, das ferner Steuermittel zum selektiven Anpassen des Systems zum Betreiben als eine Wärmepumpe beinhaltet, wobei das Kühlmittel oberhalb des Kompressors (10) das Kondensgas/den Kühler (20) umgeht, und direkt in den ersten Wärmeaustauscher (30) läuft, wobei das Kühlmittel kondensiert/gekühlt wird, was verursacht, dass Umgebungsluft in den Innenraum durch den ersten zu wärmenden Wärmeaustauscher (30) läuft, wobei das Kühlmittel nachfolgend durch das mindestens eine Expansionsventil (50) läuft und dann in den weiteren Wärmeaustauscher (40) läuft, wobei das Kühlmittel durch Wärmetransfer mit Luft von innerhalb des Innenraums verdampft wird, wobei das Kühlmittel von dem weiteren Wärmeaustauscher (40) zurück zu dem Kompressor (10) läuft.

7. Kühlungssystem gemäß einem der vorhergehenden Ansprüche, das ferner Mittel zum Steuern des Flusses an Luft durch den weiteren Wärmeaustauscher (40) beinhaltet.

8. Kühlungssystem gemäß Anspruch 7, wobei das Mittel zum Steuern des Flusses an Luft durch den weiteren Wärmeaustauscher einen Lüfter oder ein Gebläse variabler Geschwindigkeit beinhaltet.

## Revendications

1. Un système de réfrigération destiné à un appareil de climatisation comprenant un compresseur (10) destiné à compresser un réfrigérant, un refroidisseur de gaz ou condenseur (20) en aval du compresseur (10) utilisant l'air ambiant pour refroidir et/ou condenser le réfrigérant, au moins une soupape de détente (50) en aval du refroidisseur de gaz/condenseur (20) destinée à réduire la pression du réfrigérant et un premier échangeur thermique (30) en aval de la soupape de détente (50) destiné à faire évaporer le réfrigérant et destiné à refroidir l'air fourni à un espace à refroidir, dans lequel un échangeur thermique supplémentaire (40) est fourni en aval du refroidisseur de gaz/condenseur (20) et en amont de la soupape de détente (50), **caractérisé en ce que** ledit échangeur thermique supplémentaire (40) est arrangé pour recevoir de l'air provenant de l'espace à refroidir, un tel air étant évacué depuis l'espace à refroidir en aval de l'échangeur thermique supplémentaire (40).

2. Un système de réfrigération tel que revendiqué dans la revendication 1, dans lequel le réfrigérant est du dioxyde de carbone.

3. Un système de réfrigération tel que revendiqué dans n'importe quelle revendication précédente, dans lequel l'espace à refroidir est l'habitacle d'un véhicule.

4. Un système de réfrigération tel que revendiqué dans la revendication 3, dans lequel le refroidisseur de gaz/condenseur (20) est fourni à l'extérieur de l'habitacle, de préférence à l'avant du véhicule.

5. Un système de réfrigération tel que revendiqué dans la revendication 3 ou la revendication 4, dans lequel l'échangeur thermique supplémentaire (40) est fourni dans ou adjacent à une section arrière de l'habitacle.

6. Un système de réfrigération tel que revendiqué dans n'importe quelle revendication précédente, comprenant en outre un moyen de commande destiné à adapter de façon sélective le système pour qu'il fonctionne comme une pompe à chaleur grâce à quoi le réfrigérant en amont du compresseur (10) contourne le condenseur/refroidisseur de gaz (20) et passe directement dans le premier échangeur thermique (30) dans lequel le réfrigérant est condensé/refroidi, amenant l'air ambiant passant dans l'habitacle à travers le premier échangeur thermique (30) à être chauffé, le réfrigérant passant subséquemment à travers cette au moins une soupape de détente (50) et passant ensuite dans l'échangeur thermique supplémentaire (40) dans lequel le réfrigérant est évaporé par transmission de chaleur avec de l'air provenant du sein de l'habitacle, le réfrigérant repassant de l'échangeur thermique supplémentaire (40) au compresseur (10).

7. Un système de réfrigération tel que revendiqué dans n'importe quelle revendication précédente, comprenant en outre un moyen destiné à commander l'écoulement d'air à travers l'échangeur thermique supplémentaire (40).

8. Un système de réfrigération tel que revendiqué dans la revendication 7, dans lequel le moyen destiné à commander l'écoulement d'air à travers l'échangeur thermique supplémentaire comprend un ventilateur ou une soufflante à vitesse variable.
